(19) Europäisches Patentamt
European Patent Office
Office européen des brevets

(11) **EP 0 517 324 B1**

(12) **EUROPÄISCHE PATENTSCHRIFT**

(45) Veröffentlichungstag und Bekanntmachung des Hinweises auf die Patenterteilung:
**03.09.1997 Patentblatt 1997/36**

(51) Int Cl.⁶: **H04N 7/30**

(21) Anmeldenummer: **92201577.1**

(22) Anmeldetag: **02.06.1992**

(54) **Vorrichtung zur Steuerung des Quantisierers eines Hybridkodierers**

Apparatus for controlling the quantifier of a hybrid coder

Appareil pour commander le quantificateur d'un codeur hybride

(84) Benannte Vertragsstaaten:
**DE FR GB**

(30) Priorität: **06.06.1991 DE 4118571**

(43) Veröffentlichungstag der Anmeldung:
**09.12.1992 Patentblatt 1992/50**

(73) Patentinhaber:
• **Philips Patentverwaltung GmbH
22335 Hamburg (DE)**
Benannte Vertragsstaaten:
**DE**
• **Philips Electronics N.V.
5621 BA Eindhoven (NL)**
Benannte Vertragsstaaten:
**FR GB**

(72) Erfinder: **Vogel, Peter, Dipl.-Ing.
W-8506 Diepersdorf (DE)**

(74) Vertreter: **Volmer, Georg, Dipl.-Ing. et al
Philips Patentverwaltung GmbH,
Röntgenstrasse 24
22335 Hamburg (DE)**

(56) Entgegenhaltungen:
**EP-A- 0 290 085        EP-A- 0 444 839
FR-A- 2 589 020        FR-A- 2 649 848
US-A- 5 057 916**

• **SIGNAL PROCESSING : IMAGE COMMUNICATION 2 1990, Seiten 221 - 239 'draft revision of recommandation h.261: video codec for audiovisual services at p*64 kbit/s'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung bezieht sich auf einen Hybrid-Kodierer zur datenblockweisen Kodierung der Bilder eines Videosignals und zur Steuerung eines Quantisierers in Abhängigkeit vom Füllstand eines das quantisierte und kodierte Videosignal empfangenden Pufferspeichers.

Derartige Vorrichtungen sind z.B. in Bildtelefonsystemen verwendbar, um durch gezielte Steuerung des Quantisierers eines Hybrid-Kodierers bei möglichst niedriger Übertragungsbitrate (z.B. 64 kbit/s) Videobilder ausreichender Qualität auf der Empfängerseite zu erhalten.

Eines für Hybrid-Kodierer infrage kommendes Kodierverfahren ist in der CCITT-Empfehlung H.261 näher beschrieben (vgl. z.B.: Draft Revision of Recommendation H.261: Videocodec for Audiovisual Services at p 64 kbit/s. Signal Processing: Image Communication 2 (1990) 221-239. Elsevier Science Publishers B.V.). In dieser Empfehlung sind auch die für die Durchführung des Verfahrens notwendigen Bausteine sowie deren Funktionen angegeben. Eine mit der H.261-Empfehlung verträgliche Ausgestaltung eines Hybrid-Kodierers bzw. Dekodierers ist in der Druckschrift "Description of Reference Model 7", Specialist Group on Coding for Visual Telephony, CCITT SGXV, Working Party XV/4, Doc.446, 1988 angegeben. Das erste dieser Dokumente wird im folgenden mit (D1) und das zweite mit (D2) zitiert werden.

Ein Hybrid-Kodierer besteht nach (D1) aus einem Quellenkoder, der einen Quantisierer enthält, einem Multiplex-Koder, der die vom Quellenkoder gelieferten Haupt- und Nebeninformationen in binäre Kodeworte umkodiert und zu einem seriellen Datenstrom zusammenfaßt, und aus einem darauf folgenden Pufferspeicher, der von einem Leitungskoder gefolgt wird.

Eine Kodiersteuerung steuert den Quellenkoder und den Multiplex-Koder in Abhängigkeit vom Füllstand des Pufferspeichers.

Der Name Hybrid-Kodierer beruht hier auf der gleichzeitigen Verwendung zweier Kodierprinzipien, nämlich dem Inter-Frame-Prinzip und dem Intra-Frame-Prinzip. Beim Inter-Frame-Prinzip wird die zeitliche Abhängigkeit der Videobilder und beim Intra-Frame-Prinzip die örtliche Abhängigkeit innerhalb der Videobilder genutzt.

Droht der Pufferspeicher leerzulaufen oder droht er überzulaufen, so wird die Quantisierungsschrittweite (Größe der Quantisierungsintervalle) feiner oder gröber gemacht, damit mehr oder weniger Daten anfallen. Die Steuerung erfolgt derart, daß die Quantisierungsschrittweite innerhalb eines Datenblocks bestimmter Größe (Makroblock) konstant bleibt.

Unter Datenblock werden hier Daten eines Ausschnittes aus einem Videobild verstanden. Dieser Ausschnitt ist zum Beispiel ein quadratischer Teil des sichtbaren Videobildes. In (D1) (vgl. auch die EP 029 085 A2) werden vier Arten von Datenblöcken unterschieden:

a) Blöcke, bestehend aus 64 Zahlenwerten, die entweder die Luminanzwerte eines quadratischen Bildausschnittes aus 8 x 8 Bildpunkten darstellen oder eine der beiden Chrominanzkomponenten eines quadratischen Bildausschnittes aus 16 x 16 Bildpunkten repräsentieren,

b) Makroblöcke, bestehend aus vier Luminanz- und zwei Chrominanzblöcken, die zusammen alle Daten eines quadratischen Bildausschnittes aus 16 x 16 Bildpunkten darstellen,

c) Blockgruppen, bestehend aus 33 Makroblöcken,

d) Videobilder, bestehend aus jeweils 396 Makroblöcken.

Im folgenden soll das Wort Datenblock sowohl im engeren Sinne nach (D1) verwendet werden als auch im weiteren Sinne, in dem die betreffenden Bildausschnitte beliebige Größe und Gestalt haben können.

Nach (D1) wird im Quellenkoder mit den Blöcken eine diskrete Kosinus-Transformation durchgeführt. Dies führt zu einer Bitratenreduktion aufgrund der räumlichen (besser: flächenhaften) Korrelationen, die innerhalb eines Videobildes bestehen, und stellt eine Konkretisierung des oben erwähnten Intra-Frame-Prinzips dar.

Die zeitliche Abhängigkeit aufeinanderfolgender Videobilder wird z.B. dadurch ausgenutzt, indem die Differenz der Daten von äquivalenten Bildpunkten zweier aufeinanderfolgender Videobilder erzeugt und weiterverarbeitet wird. Bildpunkte oder Datenblöcke voneinander verschiedener Videobilder sollen als äquivalent bezeichnet werden, wenn sie die gleichen Koordinaten bzw. Adressen haben, d.h., wenn ihre Lage innerhalb eines Videobildes die gleiche ist.

Der Erfindung liegt die Aufgabe zugrunde, eine Vorrichtung der eingangs genannten Art anzugeben, die mit (D1) und (D2) verträglich ist und dennoch zu einer weiteren Bitratenreduktion tenreduktion für die Übertragung von Videobildern ohne Qualitätsverlust oder zu einer Verbesserung der Bildqualität bei gleicher Übertragungsbitrate führt.

Diese Aufgabe wird durch einen Hybrid-Kodierer der eingangs genannten Art daurch gelöst,
daß eine Vorverarbeitungseinheit

- zur Bestimmung des Unterschiedes zweier aufeinanderfolgender Datenblöcke einer Folge äquivalenter Datenblöcke,
- zur Erhöhung eines Hintergrundindexes L um eine Einheit bei Unterschreiten des Unterschiedes unter eine vorgegebene Größe, und
- zur Setzung des Hintergrundindexes L auf einen Anfangswert bei Gleichheit oder Überschreiten des Unterschiedes über die vorgegebene Größe vorgesehen ist,

daß eine Kodiersteuerung

- zur Einstellung des Quantisierers auf eine feine Quantisierungskennlinie für einen Datenblock bei Erreichen eines Schwellwertes $L_{max}$ des zugehörigen Hintergrundindexes L und bei Unterschreiten eines bestimmten Füllstandes des Pufferspeichers und
- zur Einstellung des Quantisierers auf eine grobe Quantisierungskennlinie für einen Datenblock bei Überschreiten des Schwellwertes $L_{max}$ des zugehörigen Hintergrundindexes L vorgesehen ist.

Ausgestaltungen der Erfindung sind den Unteransprüchen zu entnehmen.

Bei der Erfindung wird von der Erkenntnis ausgegangen, daß es auch in einer Bewegtbildszene Bildteile gibt, die für längere Zeit (ca. 3 Sekunden und länger) unverändert bleiben. Diese Teile gehören entweder zum unveränderlichen Hintergrund der Szene oder zu Strukturen, die sich innerhalb weniger Sekunden kaum verändern (Quasi-Hintergrund). Um Bits bei der Kodierung einzusparen, wird - wegen der Möglichkeit eines Hintergrundes oder Quasi-Hintergrundes - eine von (D2) abweichende Steuerung des Quantisierers in Ausnahmesituationen vorgenommen und dabei folgendermaßen verfahren:

Zunächst werden äquivalente Makroblöcke (allgemeiner: Datenblöcke) zweier aufeinanderfolgender Videobilder auf Übereinstimmung geprüft. Stimmen die beiden Datenblöcke innerhalb vorgegebener Toleranzgrenzen überein, wird ein Hintergrundindex genannte ganze Zahl L um eine Einheit erhöht. Diese Prüfung wird mit den äquivalenten Datenblöcken des zweiten und dritten Videobildes wiederholt und der Hintergrundindex L bei Übereinstimmung um eine weitere Einheit erhöht. Auf diese Weise wird für eine prinzipiell beliebig lange Folge äquivalenter Datenblöcke fortgefahren. Ergibt sich nur ein einziges Mal der Fall, daß keine Übereinstimmung vorliegt, wird der Hintergrundindex L auf seinen Anfangswert gesetzt und mit diesem Anfangwert die Prüfung für die nächstfolgenden Videobilder von vorne begonnen. Diese Prozedur wird für alle 396 Makroblöcke der Videobilder durchgeführt. Erreicht der Hintergrundindex einer der 396 Folgen von äquivalenten Datenblöcken einen vorbestimmten Schwellwert $L_{max}$, wird der zugehörige Bildausschnitt als Hintergrund behandelt. Das bedeutet, daß repräsentative Daten für diesen Bildausschnitt mit hoher Genauigkeit übertragen werden und daß danach - sofern der Hintergrundindex über dem Wert $L_{max}$ bleibt - überhaupt keine von null verschiedenen Datenblöcke übertragen werden. Diejenigen repräsentativen Daten, die - abweichend von der Quantisierungsvorschrift nach (D2) - mit hoher Genauigkeit übertragen werden, sollen hier "Repräsentantenblock" genannt werden. Eine notwendige, aber nicht hinreichende Voraussetzung für die Übertragung eines Repräsentantenblocks ist die, daß der zugehörige Hintergrundindex L den Wert $L_{max}$ erreicht haben muß. Auf weitere Voraussetzungen wird weiter unten eingegangen.

Auf der Empfängerseite verwendet der Dekodierer entsprechend (D1) und (D2) dann nur den Repräsentantenblock, um den Hintergrund in den betreffenden Bildausschnitten aller nachfolgenden Videobilder darzustellen. An einem Dekodierer nach (D1) und (D2) sind daher bei Verwendung der Erfindung keine Änderungen vorzunehmen.

Sollte eine Videobildfolge z.B. nur aus Hintergrund bestehen, kann der Fall auftreten, daß für sehr viele der 396 Folgen äquivalenter Datenblöcke der Hintergrundindex L gleichzeitig den Wert $L_{max}$ erreicht. In einem solchen Fall muß verhindert werden, daß für diese Folgen gleichzeitig die zugehörigen Repräsentantenblöcke generiert werden und damit der Pufferspeicher zum Überlauf gebracht wird. Deshalb ist vorgesehen, den Augenblick der Erzeugung eines Repräsentantenblockes noch vom Wert mindestens eines weiteren Systemparameters, z.B. vom Pufferfüllstand oder von der aktuellen Quantisierungsschrittweite abhängig zu machen.

In einer Ausgestaltung der Erfindung wird die Bestimmung des Unterschiedes zwischen zwei äquivalenten Datenblöcken mit einer Filterung zur weitgehenden Beseitigung des Rauschens oder anderer Störungen, die von der Bilddatenquelle verursacht worden sind, gekoppelt. Diese Kopplung bringt den Vorteil, daß für die Berechnung des Unterschiedes einerseits und für die (temporale) Filterung andererseits nur ein Bildspeicher benötigt wird. Der gefilterte Datenblock besteht aus einem Mittelwert aller Datenblöcke einer Folge äquivalenter Datenblöcke, die während des Hochzählens des Hintergrundindexes L aufgetreten sind. Dies wird realisiert, indem der gefilterte Datenblock Ausgangssignal eines rekursiven Filters ist. Als Repräsentantenblock kann es sich entweder um den Datenblock handeln, bei dem der Hintergrundindex L den Wert $L_{max}$ erreicht hat oder um einen Datenblock, der mit dem oben erwähnten rekursiven Filter gewonnen wurde. Zur quantitativen Bestimmung des Unterschiedes zwischen zwei Datenblöcken ist die euklidische Vektornorm (vgl. Formel (1)) vorgesehen. Die Daten beider Blöcke werden jeweils als Komponenten eines Vektors aufgefaßt. Vom Differenzvektor wird dann die euklidische Vektornorm gebildet. Es hat sich herausgestellt, daß nicht alle Daten der Datenblöcke bei der Bestimmung des Unterschiedes berücksichtigt zu werden brauchen; eine Bestimmung nur mit Hilfe der Luminanzwerte liefert bei geringerem Aufwand gleichgute Ergebnisse. Ob der Unterschied als groß oder klein anzusehen ist, wird durch Vergleich der euklidischen Vektornorm mit einer Schwelle T ermittelt. Als geeigneter Schwellwert für die euklidische Vektornorm hat sich der Wert T = 48 herausgestellt.

Eine andere Möglichkeit besteht darin, zwei unterschiedliche Vektornormen gleichzeitig für den Differenzvektor zu verwenden, nämlich die Absolutnorm und die Maximum-Norm. Die Absolutnorm besteht aus der Summe der Beträge der Komponenten des Vektors und die Maximum-Norm aus dem Betrag der betragsmäßig größten Komponente des Vektors. Liegt die Absolutnorm unter einer ersten Schwelle T1 und die Maximum-Norm unter einer zweiten Schwelle T2, ist der Unterschied der beiden Datenblöcke gering. Als geeignete Schwellwerte haben sich die Werte $T_1 = 3 \times 256$, $T_2 = 20$ herausgestellt.

Anhand der Figuren und anhand eines Ausführungsbeispiels soll die Erfindung nun näher erläutert werden. Es zeigen:

Fig. 1 ein Blockdiagramm eines Kodeks mit erfindungsgemäßen Ergänzungen,
Fig. 2 Details eines Blockdiagramms eines Quellenkoders mit erfindungsgemäßen Ergänzungen,
Fig. 3 und 4 Details der erfindungsgemäßen Vorrichtung zur Steuerung des Quantisierers und
Fig. 5 Ergebnisse einer Simulation für eine Standardbildsequenz.

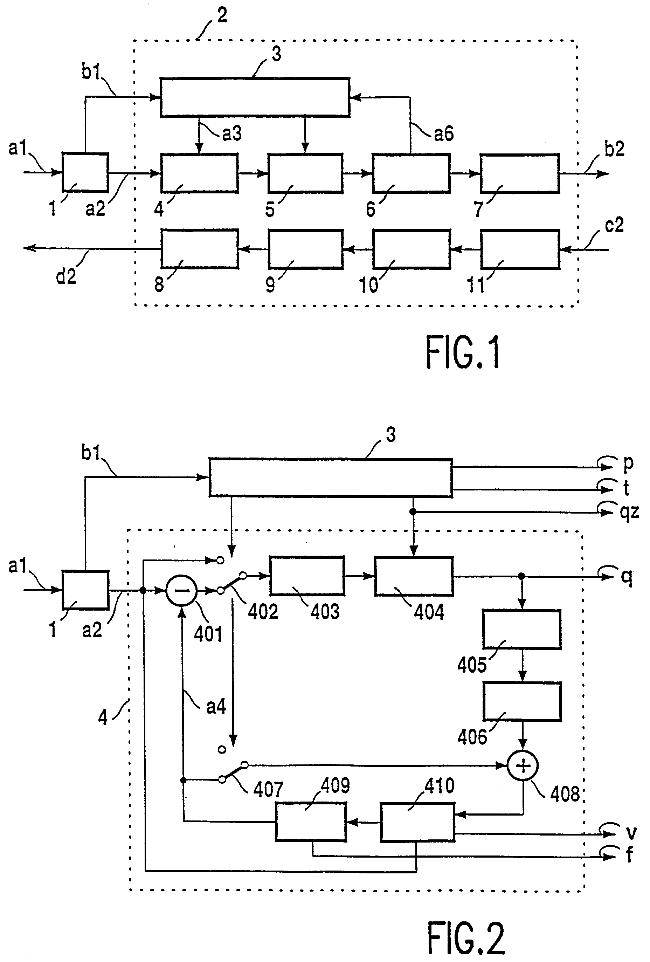

In Fig. 1 gehören die mit einer unterbrochenen Linie umrandeten Bausteine zu einem Kodek 2, der alle Schaltungs- und Funktionsmerkmale enthält, die er laut (D1) haben soll. Die Bausteine 3, 4, 5, 6 und 7 gehören zum Hybrid-Kodierer des Kodeks 2 und die Bausteine 8, 9, 10, 11 zum (Hybrid)-Dekodierer. Im folgenden werden für Leitungen, für die Anschlüsse und für die Signale, die über diese Leitungen übertragen werden, die gleichen Bezugszeichen verwendet.

Beim Baustein 4 handelt es sich um einen Quellenkoder, dessen Ausgangdaten einem Multiplex-Koder 5 zugeführt werden. Der Multiplex-Koder 5, der von einer Kodiersteuerung 3 gesteuert wird, kodiert seine Eingangsdaten binär und faßt sie zu einem seriellen Bitstrom zusammen, der laufend in den nachgeschalteten (Sende-) Pufferspeicher 6 eingelesen wird. Der Füllstand des Pufferspeichers 6 wird von der Kodiersteuerung 3 überwacht, die mit Hilfe der Füllstandsdaten auch den Quellenkoder 4 steuert, insbesondere den Quantisierer des Quellencoders. Nach dem Auslesen des digitalen Videosignales aus dem Pufferspeicher 6 wird das Signal einem Leitungskoder 7 übergeben und über eine Leitung b2 an einen Empfänger übertragen.

Die zu kodierenden Videodaten werden über eine Leitung a1 einer Vorverarbeitungseinheit 1 makroblockweise zugeführt. Die Vorverarbeitungseinheit 1 dient der zusätzlichen Steuerung des Quantisierers; sie vergleicht äquivalente Makroblöcke aufeinanderfolgender Videobilder und leitet daraus den Wert eines sogenannten Hintergrundindexes L ab, der - über eine Leitung b1 an die Kodiersteuerung 3 übertragen wird. Nähere Angaben über Funktionen der Vorverarbeitungseinheit 1 erfolgen weiter unten.

Das zu dekodierende Videosignal wird auf einer Leitung c2 dem Dekodierer 8, 9, 10, 11 zugeführt. Es wird durch einen Leitungsdekoder 11 dekodiert, sodann in einen Empfangspuffer 10 eingeschrieben, von einem Multiplex-Dekoder 9 und von einem Quellendekoder 8 dekodiert und über eine Leitung d2 an einen nicht gezeigten Monitor überführt.

In Fig. 2 ist noch einmal ein Teil des Kodeks nach Fig. 1 schematisch dargestellt, und zwar handelt es sich um den Quellenkoder 4 mit der Kodiersteuerung 3 und der Vorverarbeitungseinheit 1. Die Kodiersteuerung 3 und der Quellenkoder 4 sind über Leitungen p, t, qz, q, v und f mit dem in Fig. 1 gezeigten Multiplex-Koder 5 verbunden. Über die Leitungen p, t, qz, v und f werden sogenannte Nebeninformationen übertragen und über die Leitung q Hauptinformationen. Näheres über die Art und die Bedeutung der Neben- und Hauptinformationen findet man in (D1).

Der Quellenkoder 4 enthält eine Transformationseinheit 403 und einen darauf folgenden Quantisierer 404. Mit diesen beiden Bausteinen wird bei einem Kodierer nach der H.261-Empfehlung ein entscheidende Anteil der Bitratenreduktion erreicht. Das Ausgangssignal, das aus Quantisierungsindizes besteht, wird auf der Leitung q dem nachfolgenden Multiplexer 5 zugeführt. Eine Rückkopplungsschleife enthält eine Einheit 405 zur Gewinnung von quantisierten Abtastwerten aus den Quantisierungsindizes. Danach wird mit den quantisierten Abtastwerten die Wirkung der Transformationseinheit 403 durch eine Einheit 406 rückgängig gemacht. Mit einem Addierer 408 und einem Bildspeicher 410 wird das blockweise dekodierte Bild blockweise im Bildspeicher 410 abgespeichert. Der Subtrahierer 401 bildet die Differenz der Daten eines Eingangsblocks und der Daten eines über eine Leitung a4 durch ein Filter 409 gefilterten Prädiktionsblocks. Diese Differenz wird im folgenden Differenzblock genannt. Der Umschalter 402 und ein weiterer Umschalter 407 werden von der Kodiersteuerung 3 derart gesteuert, daß sie in der eingezeichneten Stellung verharren, wenn Differenzblöcke kodiert werden sollen, und daß sie anderenfalls (bei der direkten Kodierung der Eingangsblöcke) in ihre zweite Position gebracht werden.

Das Filter 409 in der Rückkopplungsschleife des Quellenkoders 4 kann wirksam geschaltet werden; der Schaltzustand dieses Filters 409 wird durch das Signal f signalisiert. Mit Hilfe des Bildspeichers 410 wird auch die sogenannte Bewegungschätzung durchgeführt. Das Ergebnis dieser Bewegungsschätzung sind die Komponenten eines zweidimensionalen Bewegungsvektors, dessen Daten auf der Leitung v weitergeleitet werden.

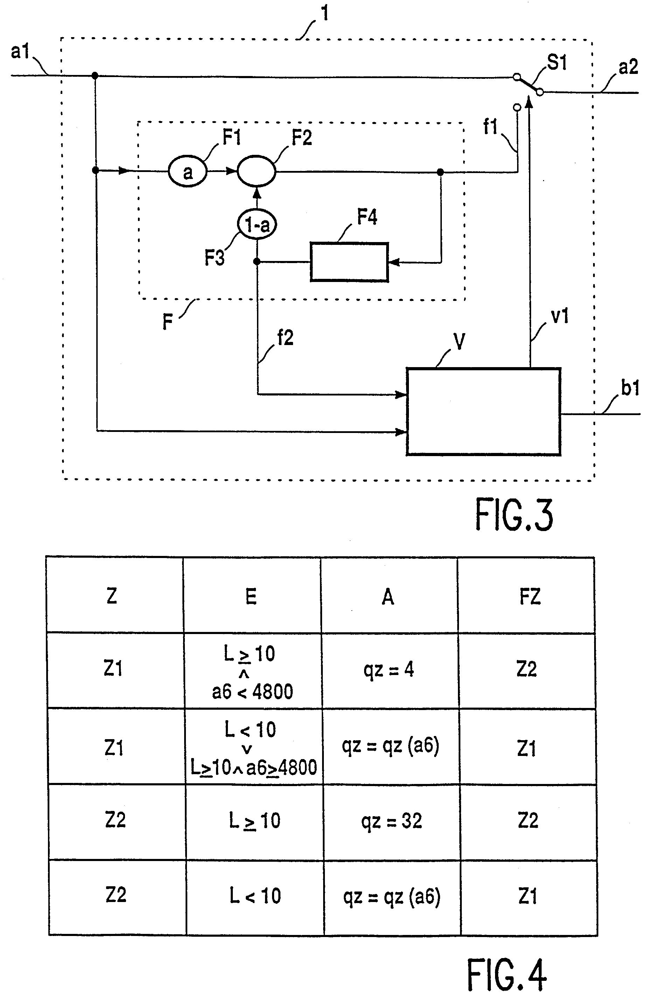

Fig. 3 zeigt schematisch die Vorverarbeitungseinheit 1. Die Bezeichnung ihrer Eingangs- und Ausgangsleitungen ist die gleiche wie in Fig. 1. Hauptbestandteile der Vorverarbeitungseinheit 1 sind ein rekursives Filter F und eine Vergleichsschaltung V. Durch das Filter F werden alle 396 Makroblöcke eines Videobildes mit Hilfe eines geeignet gewählten Filterparameters a (hier mit dem Wert 0,5) von Störungen wie z.B. das Kamerarauschen weitgehend befreit. Ein Makroblock wird durch einen ersten Multiplizierer F1 am Eingang des Filters F mit dem Parameter a multipliziert und durch einen Addierer F2 zu dem äquivalenten Makroblock hinzuaddiert, der über ein Verzögerungsglied F4 um eine Bildtaktperiode verzögert und durch einen weiteren Multiplizierer F3 mit dem Faktor $1 - a = 0,5$ multipliziert worden ist. Als Verzögerungsglied F4 wird ein adressierbarer Bildspeicher verwendet. Der gefilterte und verzögerte Makroblock auf der Ausgangsleitung f2 des Verzögerungsgliedes F4 wird mit dem unverzögerten und ungefilterten Makroblock auf der Eingangsleitung a1 von der Vergleichsschaltung V verglichen.

Vergleichen bzw. den Unterschied bestimmen heißt im vorliegenden Zusammenhang, den nach einer Abstandsnorm bestimmten Abstand zwischen zwei äquivalenten Makroblöcken zu bewerten. Als Abstandsnorm wird die euklidische Vektornorm verwendet, nämlich

$$\sqrt{\sum_{i=1}^{n} x^2_i} \quad , \quad\quad\quad (1)$$

also die Quadratwurzel aus der Summe der Zahlen $x^2_i$, wobei $x_i$ die Komponenten des Differenzvektors $\underline{x}$ bedeuten, der sich ergibt, wenn die Daten zweier aufeinanderfolgender äquivalenter Makroblöcke zu jeweils einem Vektor zusammengefasst werden und zwischen diesen beiden Vektoren die Vektordifferenz gebildet wird. Die Summe in Formel (1) läuft nur über die Luminanzwerte eines Makroblocks, es ist also $n = 256$, weil sich herausgestellt hat, daß eine zusätzliche Verwendung der Chrominanzwerte den durch (1) definierten Abstand nur unwesentlich ändert. Man erhält also mit dem geringeren Rechnenaufwand die gleichen Informationen.

Fällt die durch (1) definierte Norm - abgekürzt $\| \underline{x} \|$ - unter eine Schwelle T, mit $T = 3 \cdot (n)^{\frac{1}{2}} = 3 \cdot (256)^{\frac{1}{2}} = 48$, so gibt die Vergleichsschaltung V über die Leitung b1 einen Zählimpuls an die Kodiersteuerung 3 ab und bringt über eine Steuerleitung v1 einen steuerbaren Schalter S1 in eine Stellung, in der der gefilterte, aber unverzögerte Makroblock über eine Ausgangsleitung f1 des Filters F und die Leitung a2 dem Quellenkoder 4 zugeführt wird. Ist der Abstand $\| \underline{x} \|$ größer oder gleich T, wird kein Zählimpuls übertragen und es wird der Schalter S1 in der eingezeichneten Stellung gehalten. In dieser Stellung wird der ungefilterte und unverzögerte Makroblock an den Quellenkoder 4 weitergeleitet. Der Sinn, nur dann gefilterte Makroblöcke auf der Leitung a2 weiterzuleiten, wenn der Abstand $\| \underline{x} \|$ unter der Schwelle T liegt, ist der, daß in diesem Fall Unterschiede herausgefiltert werden, die vor allem auf Rauschen und nicht auf einer Szenenänderung beruhen. Wählt man den Filterparameter a zu 1, entfällt die Filterwirkung des Filters F.

Die Realisierung einer Schaltung, die die Formel (1) auswertet und den Vergleich mit der Schwelle T vornimmt, sowie Steuer- bzw. Zählimpulse auf den Leitungen v1 und b1 abgibt, liegt für den Fachmann auf der Hand, so daß hier funktionelle Angaben als ausreichend angesehen werden.

Die nun folgenden Ausführungen dienen der Darstellung der notwendigen Veränderungen, die an der Kodiersteuerung 3 vorgenommen werden müssen, um bei dem geschilderten Aufbau der Vorverarbeitungseinheit 1 die Erfindung zu realisieren. Denkbar ist auch, mehr oder sogar alle Maßnahmen zur Realisierung der Erfindung in die Vorverarbeitungseinheit 1 zu verlegen. Die Vorverarbeitungseinheit 1 könnte dann alle von (D1) und (D2) abweichenden Steuersignale für den Quantisierer 404 erzeugen, die dann im Bedarfsfall statt der Steuersignale nach dem Stand der Technik den Quantisierer 404 steuern.

Vorteilhafter ist es jedoch, möglichst viele Merkmale der Erfindung in der Kodiersteuerung 3 unterzubringen, weil diese bei modernen Hybrid-Kodierern ohnehin aus einem programmierbaren Rechner besteht und Veränderungen damit nur Eingriffe in bestehende Programme oder Programmteile bedeuten. Die dabei erforderlichen Fähigkeiten, Funktionsangaben in Programmschritte zu übersetzen, liegen im Rahmen dessen, was der Fachmann üblicherweise zu leisten hat, so daß hier lediglich eine detaillierte funktionelle Beschreibung angegeben wird, die zur Erstellung von Programmen in den höheren Programmiersprachen wie C, Fortran, Basic, DSPARC oder DABL für ausreichend erachtet wird. Zur Stützung dieser Aussage sind weiter unten eine Reihe von Fundstellen angegeben, die Programmierbeispiele u.a. für komplizierte Zähler enthalten.

Zunächst ist in der Kodiersteuerung 3 für jeden Makroblock einschließlich seine äquivalenten Makroblöcke ein Zähler vorgesehen. Insgesamt sind das 396 Zähler, bzw. deren Realisierung durch ein Programm (vergleiche z.B.[5]). Bekommt nach Verarbeitung eines Makroblocks die Kodiersteuerung 3 einen Zählimpuls über die Leitung b1 von der Vorbereitungseinheit 1, wird der zu diesem Makroblock gehörende Zähler um eine Einheit heraufgesetzt. Bekommt die Kodiersteuerung 3 keinen Zählimpuls, wird der Zähler auf seinen Anfangswert 1 gesetzt.

Die weitere Beschreibung soll anhand der Fig. 4 erfolgen. Die Fig. 4 zeigt eine Automatentabelle, wie sie zur Beschreibung von Automaten verwendet wird. In der ersten Spalte Z sind die Zustände des Automaten angegeben. In der zweiten Spalte E sind Ereignisse eingetragen. In der dritten Spalte A ist der Vorgang angegeben, der durchgeführt werden soll, wenn sich der Automat im Zustand der zugehörigen Zeile befindet und das zugehörige Ereignis eingetreten ist. Die vierte Spalte FZ gibt den Folgezustand an, in den der Automat überzugehen hat, wenn alle in der gleichen Zeile stehenden Angaben zutreffen bzw. die erforderlichen Handlungen ausgeführt worden sind. Jedem der oben erwähnten Zähler ist ein solcher Automat zugeordnet, der u. a. den Stand L (Hintergrundindex) des zugeordneten Zählers dazu verwendet, um durch Abfragen festzustellen, ob bestimmte Ereignisse in der Spalte E eingetreten sind oder nicht.

In der ersten Zeile unter der Spalte E wird abgefragt, ob der Hintergrundindex L größer oder gleich $L_{max}$ = 10 ist und ob gleichzeitig (logische Konjunktion $\Lambda$) der Füllstand a6 des Pufferspeichers 6 kleiner als 4800 bit ist. Das Fassungsvermögen des Pufferspeichers 6 beträgt maximal 6400 bit; der augenblickliche Füllstand des Pufferspeichers 6 wird als Zahl a6 laufend der Kodiersteuerung 3 übermittelt.

Sind beide Bedingungen erfüllt, wird die Variable qz auf 4 gesetzt. Diese Variable gibt die Nummer der Quantisierungskennlinie an, die vom Quantisierer 404 verwendet wird. Mit dieser Kennlinie wird der Repräsentantenblock quantisiert. Insgesamt sind 32 Quantisierungskennlinien, also auch ebenso viele Nummern dafür vorgesehen. Die Kennlinie mit der Nummer 1 ist die mit der feinsten Quantisierung, das heißt, die mit den kleinsten Quantisierungsintervallen. Mit wachsender Nummer für die Quantisierungskennlinien nimmt auch die Größe der Quantisierungsintervalle zu, bis zur Kennlinie mit der Nummer 32, deren Quantisierung am gröbsten ist. Die Quantisierungskennlinie der Nummer 4 ist also eine Kennlinie mit relativ feiner Quantisierung. Nach der Wertzuweisung an die Variable qz wird die Zustandsvariable Z auf den Wert Z2 gesetzt.

Ist der Automat im Zustand Z1 und ist das in der zweiten Zeile unter E aufgeführte Ereignis, nämlich L < $L_{max}$ = 10 oder (logische Disjunktion v) L $\geq$ $L_{max}$ = 10 und ($\Lambda$) a6 $\geq$ 4800 eingetreten, so wird die nach (D2) vorgesehene Kennlinie verwendet, die eine Funktion des Füllstandes a6 ist und in der Spalte A durch qz = qz(a6) angedeutet ist. Diese Funktion ist in Form einer Tabelle in den Speichern der Kodiersteuerung 3 abgespeichert. Die Zustandsvariable Z wird nicht verändert.

Die gröbste Quantisierung wird dann verwendet, wenn sich der Automat im Zustand Z2 befindet und L $\geq$ $L_{max}$ = 10 ist, wie Zeile 3 der Fig. 4 zeigt. In diesem Fall wird die Zustandsvariable ebenfalls nicht geändert. Im Laufe der Kodierung kann der zugehörige Hintergrundindex L dann nur noch auf 1 gesetzt werden, so daß die Bedingungen in der Spalte Z und E der vierten Zeile nach Fig. 4 zutreffen. In diesem Fall wird die übliche Quantisierungskennlinie qz (a6) verwendet und die Variable Z auf den Wert Z1 zurückgesetzt.

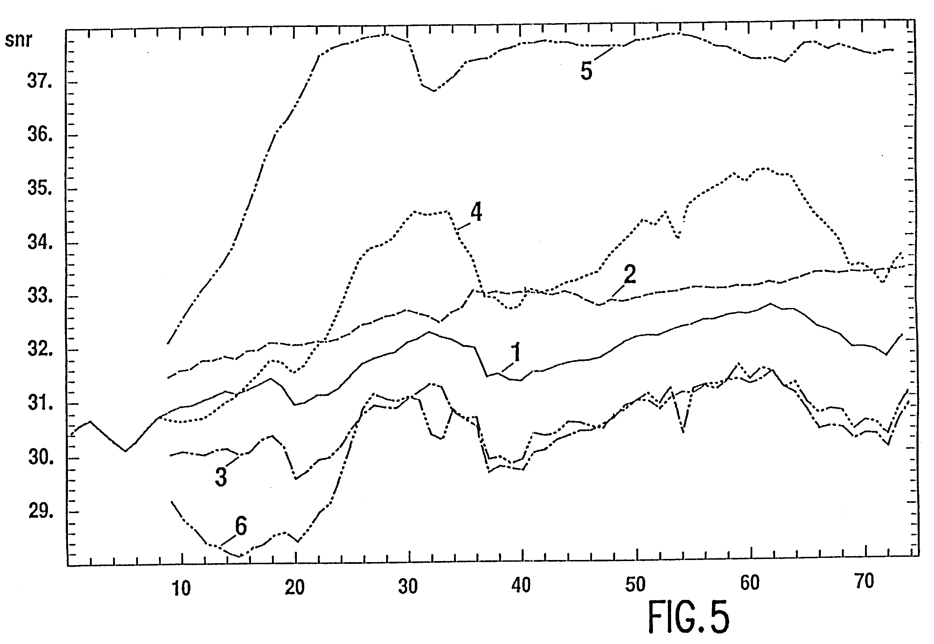

Die Wirksamkeit der Erfindung ist den Kurven der Fig. 5 abzulesen. In dieser Figur ist das Signal-Rausch-Verhältnis snr eines jeden dekodierten Bildes gegen die Anzahl der Bilder einer Testsequenz (Salesman) aus 75 Bildern aufgetragen. Die Kurven 1, 2 und 3 sind mit einem Kodierer gewonnen, der nach (D1) und (D2) konstruiert worden ist, die Kurven 4, 5 und 6 mit einem erfindungsgemäß konstruierten Kodierer.

Die Kurven 3 und 6 stellen das Signal-Rausch-Verhältnis für jene Bildbereiche dar, die nicht zum Hintergrund oder Quasi-Hintergrund gehören und hier als Vordergrund bezeichnet werden. Anfänglich ist für diese Bildbereiche das Signal-Rausch-Verhältnis für die Kurve 3 günstiger als das für die Kurve 6. Das ist verständlich, da ein erfindungsgemäßer Kodierer zunächst mit großer Genauigkeit Hintergrundbereiche aufbaut, und zwar auf Kosten des Vordergrundes. Erst wenn für den Hintergrund keine Information mehr übertragen werden muß, fallen die Kurven 3 und 6 fast aufeinander.

Die Kurven 2 und 5 stellen das Signal-Rausch-Verhältnis für den Hintergrund dar. Es ist offenbar, daß die Kurve 5 ein wesentlich besseres Ergebnis darstellt. Entsprechendes gilt für die Kurven 1 und 4, bei denen der Gesamtbildbereich zur Ermittlung des Signal-Rausch-Verhältnisses verwendet wurde.

Hilfe bei der Simulation von Schaltungen durch Programme bzw. Hilfe bei der Umsetzung von Funktionsangaben in Programme kann sich der Fachmann aus folgenden Druckschriften holen:

[1] Fliege, N.: "Digitale Filter mit dem Signalprozessor 2920". Elektronik (1981), Seiten 81 bis 85 und Seiten 89 bis 94.
[2] Müller, K.-H.: "Echtzeitsimulation mit dem Analog-Prozessor 2920". Elektronik (1981), Seiten 95 bis 98.
[3] Signal Processing Algorithms. Prentice-Hall., Inc., Englewood Cliffs, New Jersey 07632.
[4] Oberhofer, A.: "Zustandsregelung mit digitalen Filtern". Elektronik (1985), Seiten 63 bis 68.
[5] Handbücher der Daisy Systems Corporation "Simulation Compilation". August 1988 und "Daisy Behavioral Language". September 1988
[6] Handbuch der Data I/O Corporation, January 1989, ISDN 984-0029-002, Seiten 10 - 28 und 10 - 30.

**Patentansprüche**

1. Hybrid-Kodierer zur datenblockweisen Kodierung der Bilder eines Videosignals (a2) und zur Steuerung eines Quantisierers (404) in Abhängigkeit vom Füllstand eines das quantisierte und kodierte Videosignal empfangenden Pufferspeichers (6),
<u>dadurch gekennzeichnet</u>,
daß eine Vorverarbeitungseinheit (1)

- zur Bestimmung des Unterschiedes zweier aufeinanderfolgender Datenblöcke einer Folge äquivalenter Datenblöcke,
- zur Erhöhung eines Hintergrundindexes L um eine Einheit bei Unterschreiten des Unterschiedes unter eine vorgegebene Größe, und
- zur Setzung des Hintergrundindexes L auf einen Anfangswert bei Gleichheit oder Überschreiten des Unterschiedes über die vorgegebene Größe vorgesehen ist,

daß eine Kodiersteuerung (3)

- zur Einstellung des Quantisierers (404) auf eine feine Quantisierungskennlinie für einen Datenblock bei Erreichen eines Schwellwertes $L_{max}$ des zugehörigen. Hintergrundindexes L und bei Unterschreiten eines bestimmten Füllstandes des Pufferspeichers (6) und
- zur Einstellung des Quantisierers (404) auf eine grobe Quantisierungskennlinie für einen Datenblock bei Überschreiten des Schwellwertes $L_{max}$ des zugehörigen Hintergrundindexes L vorgesehen ist.

2. Hybrid-Kodierer nach Anspruch 1,
   <u>dadurch gekennzeichnet</u>,

   daß nach der Einstellung des Quantisierers (404) auf eine feine Quantisierungskennlinie für einen Datenblock bei Erreichen eines Schwellwertes $L_{max}$ des zugehörigen Hintergrundindexes L und bei Unterschreiten eines bestimmten Füllstandes des Pufferspeichers (6) der Quantisierer zur Erzeugung eines Repräsentantenblocks vorgesehen ist und
   daß es sich bei dem Repräsentantenblock um den Datenblock handelt, bei dem der Hintergrundindex den Wert $L_{max}$ erreicht hat, oder um einen gefilterten Datenblock (fl) handelt, der einen Mittelwert aller Datenblöcke einer Folge äquivalenter Datenblöcke darstellt, die während des Hochzählens des Hintergrundindexes L aufgetreten sind.

3. Hybrid-Kodierer nach Anspruch 1 oder 2,
   <u>dadurch gekennzeichnet</u>,
   daß die Vorverarbeitungseinheit zur Verwendung der euklidischen Vektornorm zusammen mit einer Schwelle zur quantitativen Bestimmung des Unterschiedes zwischen zwei Datenblöcken vorgesehen ist.

4. Hybrid-Kodierer nach Anspruch 1 oder 2,
   <u>dadurch gekennzeichnet</u>,
   daß die Vorverarbeitungseinheit zur Verwendung der Absolutnorm und der Maximum-Norm zusammen mit zwei Schwellen zur quantitativen Bestimmung des Unterschiedes zwischen zwei Datenblöcken vorgesehen ist.

5. Hybrid-Kodierer nach Anspruch 3 oder 4,
   <u>dadurch gekennzeichnet</u>,
   daß die Vorverarbeitungseinheit nur zur Berücksichtigung der Luminanzdaten bei der Berechung der Vektornormen vorgesehen ist.

6. Hybrid-Kodierer nach einem der vorhergehenden Ansprüche,
   <u>dadurch gekennzeichnet</u>,
   daß der Hybrid-Kodierer einen programmierten Signalprozessor zur Ausführung wenigstens von angegebenen Teilfunktionen enthält.

## Claims

1. A hybrid coder for coding the pictures of a video signal (a2) in data blocks and for controlling a quantizer (404) in dependence upon the filling level of a buffer memory (6) receiving the quantized and coded video signal, characterized in that

a preprocessing unit (1) is provided for

- determining the difference between two consecutive data blocks of a sequence of equivalent data blocks,
- increasing a background index L by one unit when the difference falls below a predetermined value, and for
- setting the background index L to its initial value when the difference is equal to, or exceeds the predetermined value,

in that a coding control means (3) is provided for

- setting the quantizer (404) to a fine quantization characteristic for a data block when a threshold value $L_{max}$ of the associated background index L is reached and when falling below a given filling level of the buffer memory (6), and for
- setting the quantizer (404) to a coarse quantization characteristic for a data block when the threshold value $L_{max}$ of the associated background index L is exceeded.

2. A hybrid coder as claimed in Claim 1,
characterized in that, after setting the quantizer (404) to a fine quantization characteristic for a data block when a threshold value $L_{max}$ of the associated background index L is reached and when falling below a given filling level of the buffer memory (6), the quantizer is provided for generating a representative block, and in that the representative block is the data block in which the background index has reached the value $L_{max}$, or is a filtered data block (f1) which represents a mean value of all data blocks of a sequence of equivalent data blocks which have occurred during count-up of the background index L.

3. A hybrid coder as claimed in Claim 1 or 2,
characterized in that the preprocessing unit is provided for using the Euclidean vector together with a threshold for the quantitative determination of the difference between two data blocks.

4. A hybrid coder as claimed in Claim 1 or 2,
characterized in that the preprocessing unit is provided for using the absolute value and the maximum value together with two thresholds for the quantitative determination of the difference between two data blocks.

5. A hybrid coder as claimed in Claim 3 or 4,
characterized in that the preprocessing unit is provided only for taking the luminance data into account when computing the vectors.

6. A hybrid coder as claimed in any one of the preceding Claims,
characterized in that the hybrid coder comprises a programmed signal processor for performing at least indicated partial functions.

**Revendications**

1. Codeur hybride pour coder sous la forme de blocs de données les images d'un signal vidéo (a2) et pour commander un quantificateur (404) en fonction de l'état de remplissage d'une mémoire tampon (6) recevant le signal vidéo quantifié et codé, caractérisé en ce qu'il est prévu :
une unité de prétraitement (1)

- pour déterminer la différence de deux blocs de données successifs d'une suite de blocs de données équivalents,
- pour accroître un indice d'arrière-plan L d'une unité lorsque la différence passe en dessous d'une grandeur prédéterminée, et
- pour mettre l'indice d'arrière-plan L à une valeur initiale lorsque la différence est égale à la grandeur prédéterminée ou passe au-dessus de celle-ci, et une commande de codage (3)
- pour régler le quantificateur (404) sur une caractéristique de quantification fine pour un bloc de données lorsqu'on atteint une valeur de seuil $L_{max}$ de l'indice d'arrière-plan L connexe et lorsque l'on passe en dessous d'un état de remplissage déterminé de la mémoire tampon (6), et
- pour régler le quantificateur (404) sur une caractéristique de quantification grossière pour un bloc de données lorsqu'on passe au-dessus de la valeur de seuil $L_{max}$ de l'indice d'arrière-plan L.

2. Codeur hybride selon la revendication 1, caractérisé en ce que
après réglage du quantificateur (404) sur une caractéristique de quantification fine pour un bloc de données lorsque l'indice d'arrière-plan concerné L atteint une valeur de seuil $L_{max}$ et lors du passage en dessous d'un état de remplissage déterminé de la mémoire tampon (6), le quantificateur est prévu pour produire un bloc de représentants, et en ce que
le bloc de représentants est le bloc de données dans lequel l'indice d'arrière-plan a atteint la valeur $L_{max}$ ou un bloc de données filtré (fl) qui représente une valeur moyenne de tous les blocs de données d'une séquence de blocs de données équivalents, qui sont apparus au cours du comptage de l'indice d'arrière-plan L.

3. Codeur hybride selon la revendication 1 ou 2, caractérisé en ce que l'unité de prétraitement est prévue pour utiliser la norme vectorielle euclidienne conjointement avec un seuil afin de déterminer quantitativement la différence entre deux blocs de données.

4. Codeur hybride selon la revendication 1 ou 2, caractérisé en ce que l'unité de prétraitement est prévue pour utiliser la norme absolue et la norme maximale conjointement avec deux seuils pour la détermination quantitative de la différence entre deux blocs de données.

5. Codeur hybride selon la revendication 3 ou 4, caractérisé en ce que l'unité de prétraitement n'est prévue que pour tenir compte des données de luminance lors du calcul des normes vectorielles.

6. Codeur hybride selon l'une quelconque des revendications précédentes,
caractérisé en ce que
le codeur hybride contient un processeur de signaux programmé pour réaliser au moins des fonctions partielles indiquées.

FIG.1

FIG.2

FIG.3

| Z | E | A | FZ |
|---|---|---|---|
| Z1 | $L \geq 10$<br>$\wedge$<br>$a6 < 4800$ | $qz = 4$ | Z2 |
| Z1 | $L < 10$<br>$\vee$<br>$L \geq 10 \wedge a6 \geq 4800$ | $qz = qz\,(a6)$ | Z1 |
| Z2 | $L \geq 10$ | $qz = 32$ | Z2 |
| Z2 | $L < 10$ | $qz = qz\,(a6)$ | Z1 |

FIG.4

11

FIG.5

EP 0 517 324 B1